# EUROPEAN PATENT APPLICATION

(11) **EP 4 411 458 A1**
(43) Date of publication of application: **07.08.2024**
(21) Application number: 22876299.3
(22) Date of filing: 28.09.2022
(51) Int. Cl.: G02C 7/00, C08L 71/00, G02B 1/18

(54) **EYEGLASS LENS, ANTIFOULING AGENT COMPOSITION, AND METHOD FOR MANUFACTURING EYEGLASS LENS**

(30) Priority: 30.09.2021 JP 2021160791
(71) Applicant: HOYA LENS THAILAND LTD., Pathumthani 12130 (TH)
(72) Inventor: SEKIGUCHI, Yusuke, Tokyo 160-8347 (JP); KAWAKAMI, Hironori, Tokyo 160-8347 (JP); ISHIKAWA, Masakazu, Tokyo 160-8347 (JP)
(74) Representative: Hoffmann Eitle
(86) International application number: PCT/JP2022/036082
(87) International publication number: WO 2023/054433

(57) **Abstract**

An embodiment of the present disclosure relates to a spectacle lens including an antifouling layer which is a condensate of an antifouling agent composition containing: a compound (A) having a silyl group and a fluorinated alkyl group; a compound (B) having a silyl group at one end and a reactive group at the other end; and a chain fluorine compound (C) having no reactive group.

## Description

### Technical Field

The present disclosure relates to a spectacle lens, an antifouling agent composition, and a method for manufacturing the spectacle lens.

### Background Art

When a spectacle lens is used, dirt due to adhesion of hand marks, fingerprints, sweat, cosmetics, and the like is conspicuous. Therefore, an antifouling layer is formed on a surface in order to make the spectacle lens hardly stained or to wipe off dirt easily. For example, Patent Literature 1 describes a spectacle lens having a fluorine-containing antifouling film on a surface thereof, and having surface free energy of 10.0 mJ/m² or less and a base component of the surface free energy of 0.95 mJ/m² or less.

### Citation List

### Patent Literature

Patent Literature 1: JP 2018-004921 A

### Summary of Invention

### Technical Problem

In the spectacle lens having an antifouling layer disclosed in Patent Literature 1, it is easy to wipe off matters adhering to a surface thereof, such as a fingerprint. Meanwhile, there is a problem that when lens shaping of cutting the spectacle lens so as to match the shape of a frame is performed, the surface is slippery, and therefore axial displacement easily occurs.

An embodiment of the present disclosure relates to a spectacle lens that has excellent wipeability and suppresses occurrence of axial displacement during lens shaping, an antifouling agent composition, and a method for manufacturing the spectacle lens.

### Solution to Problem

The present inventor has found that by using an antifouling agent composition containing: a compound (A) having a silyl group and a fluorinated alkyl group; a compound (B) having a silyl group at one end and a reactive group at the other end; and a chain fluorine compound (C) having no reactive group, a spectacle lens that has excellent wipeability and suppresses occurrence of axial displacement during lens shaping can be obtained.

An embodiment of the present disclosure relates to a spectacle lens including an antifouling layer which is a condensate of an antifouling agent composition containing:
a compound (A) having a silyl group and a fluorinated alkyl group;
a compound (B) having a silyl group at one end and a reactive group at the other end; and
a chain fluorine compound (C) having no reactive group.

An embodiment of the present disclosure relates to an antifouling agent composition containing:
a compound (A) having a silyl group and a fluorinated alkyl group;
a compound (B) having a silyl group at one end and a reactive group at the other end; and
a chain fluorine compound (C) having no reactive group.

An embodiment of the present disclosure relates to a method for manufacturing a spectacle lens, the method including a step of forming an antifouling layer on a spectacle lens with an antifouling agent composition containing:
a compound (A) having a silyl group and a fluorinated alkyl group;
a compound (B) having a silyl group at one end and a reactive group at the other end; and
a chain fluorine compound (C) having no reactive group.

### Advantageous Effects of Invention

An embodiment of the present disclosure can provide a spectacle lens that has excellent wipeability and suppresses occurrence of axial displacement during lens shaping, an antifouling agent composition, and a method for manufacturing the spectacle lens.

### Brief Description of Drawings

Fig. 1 is a schematic cross-sectional view of a spectacle lens 1 of the present embodiment.
Fig. 2 is a diagram illustrating an outline of an axial displacement test.

### Description of Embodiments

Hereinafter, an embodiment according to the present disclosure will be described in detail, but the present disclosure is not limited thereto, and various modifications can be made without departing from the gist of the present disclosure. In the present specification, a numerical range indicated using "to" includes numerical values described before and after "to" as a minimum value and a maximum value, respectively.

Note that the content of each component in an antifouling agent composition is a value converted in a case where a silyl group is a trimethoxysilyl group when a component having the silyl group is contained.

### [Spectacle lens]

A spectacle lens of the present embodiment includes an antifouling layer which is a deposit of an antifouling agent composition containing:
a compound (A) having a silyl group and a fluorinated alkyl group;
a compound (B) having a silyl group at one end and a reactive group at the other end; and
a chain fluorine compound (C) having no reactive group.

The spectacle lens of the present embodiment has excellent wipeability and suppresses occurrence of axial displacement. A reason why the effect is obtained is not clear, but the antifouling agent composition contains the chain fluorine compound (C) having no reactive group in addition to the compound (A) with which an antifouling layer having excellent wipeability is formed and the compound (B) with which an antifouling layer capable of suppressing axial displacement is formed. In the compound (A) and the compound (B), silyl groups are condensed during vapor deposition of the antifouling agent composition to form an antifouling layer. Meanwhile, it is considered that by inclusion of the chain fluorine compound (C) having no reactive group, the fluorine compound oozes out on a surface of the antifouling layer, and the antifouling layer having particularly excellent wipeability is formed.

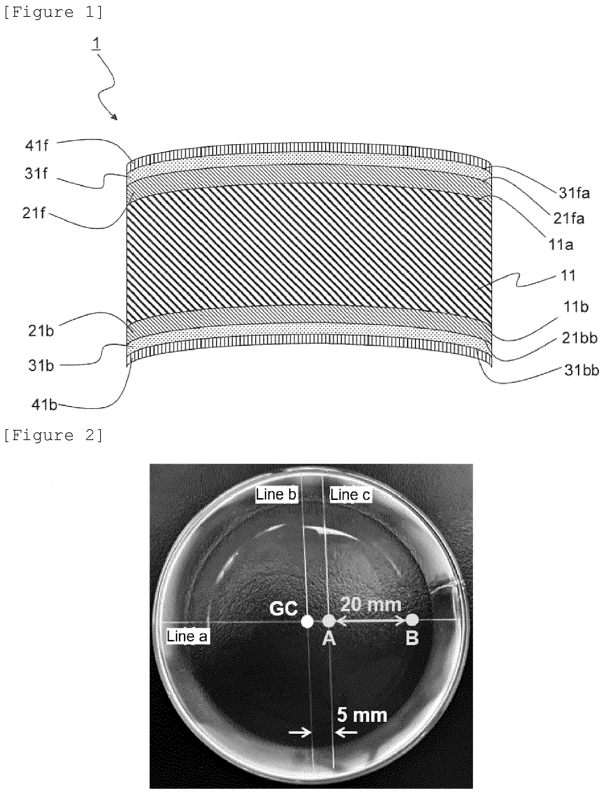

Fig. 1 is a schematic cross-sectional view of a spectacle lens 1 of the present embodiment. The spectacle lens 1 of the present embodiment includes a lens substrate 11, a hard coat layer 21f formed on an object-side surface 11a side of the lens substrate 11, a functional layer 31f formed on an object-side surface 21fa side of the hard coat layer 21f, and an antifouling layer 41f formed on an object-side surface 31fa side of the functional layer 31f.

In a case where the lens substrate 11 is a finish lens, the spectacle lens 1 of the present embodiment further includes a hard coat layer 21b formed on an eyeball-side surface 11b side of the lens substrate 11, a functional layer 31b formed on an eyeball-side surface 21bb side of the hard coat layer 21b, and an antifouling layer 41b formed on an eyeball-side surface 31bb side of the functional layer 31b.

Note that although not illustrated, an underlayer may be formed between the lens substrate 11 and the hard coat layer 21f or between the lens substrate 11 and the hard coat layer 21b.

Hereinafter, each layer in the spectacle lens of the present embodiment will be described.

### <Antifouling layer>

The antifouling layer is a condensate of an antifouling agent composition. The condensate is obtained by condensation of at least a part of the antifouling agent composition. The antifouling layer may be formed on the hard coat layer or on the functional layer, but is preferably formed on an antireflection layer. The antifouling layer is preferably located on an outermost surface.

### (Antifouling agent composition)

The antifouling agent composition contains the compound (A) having a silyl group and a fluorinated alkyl group, the compound (B) having a silyl group at one end and a reactive group at the other end, and the chain fluorine compound (C) having no reactive group.

### (Compound (A))

By containing the compound (A) having a silyl group and a fluorinated alkyl group (hereinafter, also simply referred to as "compound (A)"), the antifouling agent composition can improve wipeability of an antifouling layer to be formed for a fingerprint and the like. The compound (A) is preferably linear.

Since the compound (A) has a silyl group, a condensation reaction proceeds during vapor deposition to form an antifouling layer. Examples of the silyl group include a trialkoxysilyl group such as a trimethoxysilyl group, a triethoxysilyl group, a tripropyloxysilyl group, or a trihexyloxysilyl group. The compound (A) preferably has a silyl group at a molecular end.

Since the compound (A) has a fluorinated alkyl group, wipeability of the antifouling layer for a fingerprint and the like can be improved. Examples of the fluorinated alkyl group include a perfluoroalkyl group. The number of carbon atoms in the fluorinated alkyl group is preferably 1 to 20, more preferably 1 to 10, and still more preferably 1 to 3. The compound (A) preferably has a fluorinated alkyl group at a molecular end.

The compound (A) preferably has a fluorinated alkylene oxide chain from a viewpoint of improving wipeability of the antifouling layer for a fingerprint and the like. Examples of the fluorinated alkylene oxide chain include a polyperfluoromethylene oxide group, a polyperfluoroethylene oxide group, and a polyperfluoropropylene oxide group. The number of units of the fluorinated alkylene oxide in the fluorinated alkylene oxide chain is preferably 10 to 100, more preferably 30 to 100, and still more preferably 50 to 90.

More specifically, the compound (A) is preferably a compound represented by formula (1): 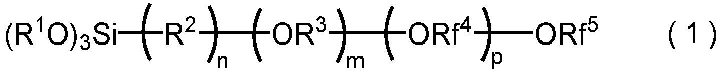 in which
R¹s each independently represent a monovalent hydrocarbon group having 1 to 6 carbon atoms,
R²s each independently represent a divalent hydrocarbon group having 1 to 6 carbon atoms, n is 0 or 1,
R³s each independently represent a divalent hydrocarbon group having 1 to 4 carbon atoms, m is 0 to 10,
Rf⁴s each independently represent a divalent fluorinated hydrocarbon group having 1 to 4 carbon atoms, p is 10 to 100, and
Rf⁵ represents a fluorinated alkyl group having 1 to 20 carbon atoms.

Examples of R¹ include a methyl group, an ethyl group, a propyl group, and a hexyl group. Among these groups, a methyl group is preferable.

Examples of R² include a methanediyl group, an ethanediyl group, a propanediyl group, and a hexanediyl group.

Examples of R³ include a methanediyl group, an ethanediyl group, and a propanediyl group. m is preferably an integer of 1 to 5, more preferably an integer of 1 to 3, and still more preferably 1.

Examples of Rf⁴ include a difluoromethanediyl group, a tetrafluoroethanediyl group, and a hexafluoropropanediyl group.

p is preferably 10 to 100, more preferably 30 to 100, and still more preferably 50 to 90.

Examples of Rf⁵ include a perfluoromethyl group, a perfluoropropyl group, a perfluorohexyl group, and a perfluorododecyl group.

(ORf⁴)ₚ in formula (1) is preferably a group represented by formula (f4-1): 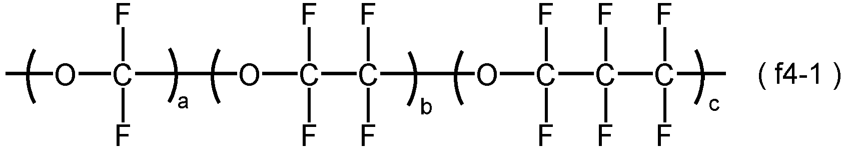
in which a is 0 to 100, b is 0 to 100, c is 0 to 100, and a + b + c is 10 to 200.
a is preferably 10 to 80, more preferably 20 to 70, and still more preferably 30 to 50.
a is preferably 10 to 80, more preferably 20 to 70, and still more preferably 30 to 50.
c is preferably 0 to 50, more preferably 0 to 30, and still more preferably 0 to 10.
a + b + c is preferably 30 to 180, more preferably 50 to 150, and still more preferably 60 to 120.

The content of the compound (A) is preferably 30 mass% to 89 mass%, more preferably 35 mass% to 80 mass%, and still more preferably 40 mass% to 70 mass% with respect to the solid content of the antifouling agent composition from a viewpoint of improving wipeability of an antifouling layer to be formed for a fingerprint and the like.

### (Compound (B))

By containing the compound (B) having a silyl group at one end and a reactive group at the other end (hereinafter, also simply referred to as "compound (B)"), the antifouling agent composition can suppress axial displacement during lens shaping in a spectacle lens having an antifouling layer to be formed. The compound (B) is preferably linear.

Since the compound (B) has a silyl group, a condensation reaction proceeds to form an antifouling layer. Examples of the silyl group include a trialkoxysilyl group such as a trimethoxysilyl group, a triethoxysilyl group, a tripropyloxysilyl group, or a trihexyloxysilyl group.

Since the compound (B) has a reactive group at the other end, slippage of the antifouling layer can be appropriately suppressed, and axial displacement during lens shaping can be suppressed.

The reactive group is, for example, at least one selected from the group consisting of a hydroxy group, a vinyl group, a silyl group, an epoxy group, and an alkoxy group. Among these groups, a hydroxy group is preferable from a viewpoint of enhancing reactivity with the silyl groups in the compound (A) and the compound (B). The hydroxy group is preferably bonded to a carbon atom.

The compound (B) preferably has a fluorinated alkylene oxide chain from a viewpoint of improving wipeability of the antifouling layer for a fingerprint and the like. Examples of the fluorinated alkylene oxide chain include a polyperfluoromethylene oxide group, a polyperfluoroethylene oxide group, and a polyperfluoropropylene oxide group. The number of units of the fluorinated alkylene oxide in the fluorinated alkylene oxide chain is preferably 10 to 100, more preferably 30 to 100, and still more preferably 50 to 90.

The compound (B) preferably has a siloxane chain structure. Examples of the siloxane chain include a polydimethylsiloxane group, a polydiethylsiloxane group, and a polydipropylsiloxane group. The number of units of siloxane in the siloxane chain is preferably 1 to 100, more preferably 10 to 900, and still more preferably 20 to 80.

More specifically, the compound (B) is a compound represented by formula (2): 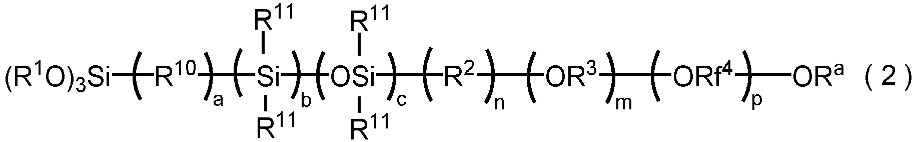 in which
R^{a} represents a group containing a reactive group,
R¹⁰s each independently represent a divalent hydrocarbon group having 1 to 4 carbon atoms, a is 0 to 10,
R²¹s each independently represent a monovalent hydrocarbon group having 1 to 4 carbon atoms or an alkoxy group having 1 to 4 carbon atoms, b is 0 to 10, c is 0 to 10,
R¹s each independently represent a monovalent hydrocarbon group having 1 to 6 carbon atoms,
R²s each independently represent a divalent hydrocarbon group having 1 to 6 carbon atoms, n is 0 or 1,
R³s each independently represent a divalent hydrocarbon group having 1 to 4 carbon atoms, m is 0 to 10,
Rf⁴s each independently represent a divalent fluorinated hydrocarbon group having 1 to 4 carbon atoms, and p is 10 to 100.
R¹, R², R³, Rf⁴, and p have the same meanings as in the above-described formula (1). (ORf⁴)ₚ in formula (2) is preferably the group represented by the above-described formula (f4-1). Definitions of substituents and the like of formula (f4-1) are similar to those described above.

Examples of R¹⁰ include a methanediyl group, an ethanediyl group, and a propanediyl group.

Examples of R¹¹ include a methyl group, an ethyl group, a methoxy group, and an ethoxy group. Among these groups, a methyl group is preferable.

R^{a} is preferably a group represented by formula (a1): 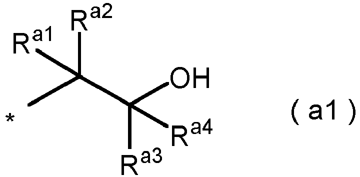 or formula (a2): 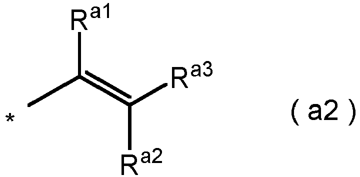
in which R^{a1}, R^{a2}, R^{a3}, and R^{a4} each independently represent a hydrogen atom or an alkyl group having 1 to 3 carbon atoms.
R^{a1}, R^{a2}, R^{a3}, and R^{a4} are preferably hydrogen atoms. R^{a} is more preferably the group represented by formula (a1).

The content of the compound (B) is preferably 10 mass% to 70 mass%, more preferably 15 mass% to 60 mass%, and still more preferably 20 mass% to 50 mass% with respect to the solid content of the antifouling agent composition from a viewpoint of suppressing axial displacement during lens shaping.

A content ratio between the compound (A) and the compound (B) in the antifouling agent composition (compound (A)/compound (B)) is preferably 0.3 to 10, more preferably 0.5 to 8, and still more preferably 0.6 to 5.

### (Compound (C))

By containing the chain fluorine compound (C) having no reactive group (hereinafter, also simply referred to as "compound (C)"), the antifouling agent composition can improve wipeability of an antifouling layer to be formed for a fingerprint and the like. By having no reactive group, the chain fluorine compound (C) does not form a bond with another component in the antifouling agent composition, and exists in the antifouling layer in a free state. Therefore, a small amount of the compound (C) oozes out on a surface of the antifouling layer at the time of use, and wipeability for a fingerprint and the like can be improved.

The compound (C) preferably has a fluorinated alkylene oxide chain from a viewpoint of improving wipeability of the antifouling layer for a fingerprint and the like. Examples of the fluorinated alkylene oxide chain include a polyperfluoromethylene oxide group, a polyperfluoroethylene oxide group, and a polyperfluoropropylene oxide group. The number of units of the fluorinated alkylene oxide in the fluorinated alkylene oxide chain is preferably 10 to 100, more preferably 30 to 100, and still more preferably 50 to 90.

The compound (C) is preferably a compound represented by formula (3): 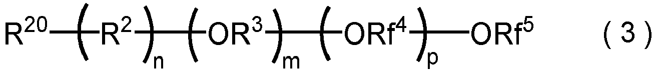
in which
R²⁰ represents a monovalent hydrocarbon group having 1 to 20 carbon atoms or a fluorinated alkyl group having 1 to 20 carbon atoms,
R²s each independently represent a divalent hydrocarbon group having 1 to 6 carbon atoms, n is 0 or 1,
R³s each independently represent a divalent hydrocarbon group having 1 to 4 carbon atoms, m is 0 to 10,
Rf⁴s each independently represent a divalent fluorinated hydrocarbon group having 1 to 4 carbon atoms, p is 10 to 100, and
Rf⁵ represents a fluorinated alkyl group having 1 to 20 carbon atoms.

R², R³, Rf⁴, and p have the same meanings as in the above-described formula (1). (ORf⁴)ₚ in formula (3) is preferably the group represented by the above-described formula (f4-1). Definitions of substituents and the like of formula (f4-1) are similar to those described above.

Examples of R²⁰ include a methyl group, an ethyl group, a hexyl group, a dodecyl group, a hexadecyl group, a perfluoromethyl group, a perfluoroethyl group, a perfluorohexyl group, a perfluorododecyl group, and a perfluorohexadecyl group.

Examples of Rf⁵ include a perfluoromethyl group, a perfluoroethyl group, a perfluorohexyl group, a perfluorododecyl group, and a perfluorohexadecyl group. Among these groups as Rf⁵, a perfluoromethyl group is preferable.

The content of the compound (C) is preferably 1 mass% to 30 mass%, more preferably 5 mass% to 25 mass%, and still more preferably 10 mass% to 20 mass% with respect to the solid content of the antifouling agent composition from a viewpoint of improving wipeability of an antifouling layer to be formed for a fingerprint and the like and from a viewpoint of suppressing axial displacement during lens shaping.

### (Method for manufacturing spectacle lens - Formation of antifouling layer -)

A method for manufacturing a spectacle lens according to the present embodiment includes a step of forming an antifouling layer on a spectacle lens with an antifouling agent composition containing the compound (A), the compound (B), and the chain fluorine compound (C). The antifouling layer is obtained by, for example, vapor deposition or coating of the antifouling agent composition, and is preferably obtained by vapor deposition.

The vapor deposition is performed by, for example, vacuum vapor deposition. In the vacuum vapor deposition, a heating temperature during the vapor deposition is preferably 400°C or higher, more preferably 550°C or higher, still more preferably 600°C or higher, and further still more preferably 650°C or higher. The heating temperature related to the vapor deposition refers to a temperature at which pellets and the like impregnated with the antifouling agent composition are heated during the vapor deposition. The heating temperature in the vacuum vapor deposition is preferably 400°C or higher, for example, in a range of 400°C to 1000°C. Note that the vacuum vapor deposition is preferably performed in a vapor deposition space controlled to a degree of vacuum of 3.0 × 10⁻² Pa or less.

For heating in the vapor deposition, for example, a halogen heater, resistance heating, an electron gun, or the like can be used, and among these, when the vapor deposition is performed by heating using an electron gun, a thin film with high accuracy can be formed. Power of the electron gun varies depending on a substance to be used, a vapor deposition apparatus, a degree of vacuum, and an irradiation area, but preferable conditions are an acceleration voltage of about 6 kV and an applied current of about 5 mA to 40 mA.

Vapor deposition time is preferably, for example, 1000 seconds or less, and more preferably 800 seconds or less or 600 seconds or less. By performing vapor deposition in such a time, vapor deposition can be performed almost simultaneously even when a water-repellent material containing a plurality of components having slightly different vapor deposition initiation temperatures is used, and a uniform film can be obtained.

The vapor deposition is preferably performed using a porous material impregnated with the antifouling agent composition.

As the porous material, it is preferable to use a sintered filter obtained by sintering a fused silica porous body or a metal powder having high thermal conductivity, such as copper or stainless steel. The size of a mesh of the sintered filter is suitably 40 um to 200 um, and preferably 80 um to 120 um from a viewpoint of obtaining an appropriate vapor deposition rate.

In addition, pellets obtained by filling a copper container with steel wool are also suitably used.

The antifouling agent composition may be used as it is or as a solution by impregnating the porous material with the antifouling agent composition.

In order to form the antifouling layer on the spectacle lens by coating, a method for dissolving a fluorine-containing silane compound in an organic solvent and applying the resulting solution to a surface of the spectacle lens can be adopted.

Examples of the coating method include a dipping method, a spin coating method, a spraying method, a flow method, a doctor blade method, roll coating, gravure coating, and curtain flow coating.

After the antifouling layer is formed, a heating step may be included. In the heating step, a reaction between the antifouling agent composition and the surface of the spectacle lens is caused to proceed. By performing the heat treatment, it is possible to suppress a decrease in water repellency due to physical and chemical loads in daily use such as wiping of the surface of the spectacle lens and adhesion of a detergent, and to enhance durability.

A temperature of the heat treatment is preferably 40°C to 90°C, more preferably 50°C to 80°C, and still more preferably 55°C to 70°C.

Time for the heat treatment is not particularly limited, but is, for example, 0.5 hours to 10 hours.

The thickness of the antifouling layer is preferably 1 nm to 5 um, more preferably 1 nm to 100 nm, and still more preferably 2 nm to 10 nm.

### (Surface free energy)

A total value of surface free energy of the antifouling layer is preferably more than 10.0 mJ/m², and more preferably 10.1 mJ/m² or more. An upper limit of the total value of the surface free energy of the antifouling layer is not particularly limited, but may be, for example, 12.0 mJ/m² or less, 11.5 mJ/m² or less, or 11.0 mJ/m² or less.

A base component of the surface free energy of the antifouling layer is preferably more than 0.95 mJ/m², more preferably 0.97 mJ/m² or more, and still more preferably 0.99 mJ/m² or more. An upper limit of the base component of the surface free energy of the antifouling layer is not particularly limited, but may be, for example, 3.0 mJ/m² or less, 2.0 mJ/m² or less, or 11.5 mJ/m² or less.

The surface free energy and the base component of the surface free energy in the present disclosure are values determined by an acid-base theory.

As a liquid for contact angle measurement, water, diiodomethane, and ethylene glycol are used, 2 µL of each of the liquids is dropped onto a surface of a substrate, and a contact angle is measured by "DM700" manufactured by Kyowa Interface Science Co., Ltd. From the measured contact angle, the surface free energy and component values constituting the surface free energy are determined by a surface free energy calculation formula based on the acid-base theory.

The surface free energy and the base component of the surface free energy can be set to the above ranges, for example, by adjusting conditions for forming the antifouling agent composition and the antifouling layer.

Next, each component of the spectacle lens according to the embodiment will be described.

### <Lens substrate>

The lens substrate may be either a finish lens or a semi-finish lens.

A surface shape of the lens substrate is not particularly limited, and may be any of a flat surface, a convex surface, a concave surface, and the like.

The lens substrate may be used for any of a monofocal lens, a multifocal lens, a progressive addition lens, and the like. For example, in a progressive addition lens, a near portion region (near portion) and a corridor region (intermediate region) are included in the above-described lower region and a distance portion region (distance portion) is included in the upper region.

As the lens substrate, a colorless material is usually used, but a colored material can also be used as long as transparency is not impaired.

The lens substrate is preferably a meniscus lens substrate. By containing the above-described compound 1, the meniscus lens substrate can suppress astigmatism.

The optical center thickness of the lens substrate is not particularly limited, but is preferably 0.5 mm to 5.0 mm, more preferably 0.5 mm to 3.0 mm, and still more preferably 0.5 mm to 2.0 mm.

The diameter of the lens substrate is not particularly limited, but is usually about 50 mm to 100 mm.

A refractive index ne of the lens substrate is preferably 1.53 or more, more preferably 1.55 or more, and still more preferably 1.60 or more.

Note that an upper limit of the refractive index ne of the lens substrate is not particularly limited, but may be, for example, 1.80 or less.

Examples of a resin of the lens substrate include a urethane-based resin, an episulfide resin, a polycarbonate resin, and an acrylic resin.

The resin is preferably at least one selected from the group consisting of a polythiourethane resin, a polysulfide resin, and a polyurethane resin, and more preferably at least one selected from the group consisting of a polythiourethane resin and a polysulfide resin.

### (Method for manufacturing lens substrate)

The lens substrate is obtained by, for example, a manufacturing method including:
a step of curing the above-described polymerizable composition; and
a step of annealing a cured resin, although not being limited thereto.

The polymerization is preferably performed by a cast polymerization method. The lens substrate is obtained, for example, by casting the polymerizable composition into a molding die combining a glass or metal mold and a tape or a gasket, and performing polymerization.

A polymerization condition can be set appropriately according to the polymerizable composition. A polymerization initiation temperature is preferably 0°C or higher, more preferably 10°C or higher, and preferably 50°C or lower, more preferably 40°C or lower. Preferably, the temperature is raised from the polymerization initiation temperature, and then heating is performed to perform curing formation. For example, the maximum temperature at heating is usually 110°C or higher and 130°C or lower.

After completion of the polymerization, the lens substrate may be released from the die and may be annealed. A temperature of the annealing treatment is preferably 100 to 150°C.

### <Hard coat layer>

The hard coat layer is, for example, a cured film formed of a curable composition containing an inorganic oxide and a silicon compound. The curable composition preferably further contains a polyfunctional epoxy compound.

Examples of the inorganic oxide include silicon oxide, aluminum oxide, titanium oxide, zirconium oxide, tungsten oxide, zinc oxide, tin oxide, beryllium oxide, antimony oxide, and a composite oxide of two or more of these inorganic oxides. These inorganic oxides may be used singly or in combination of two or more kinds thereof. Among these inorganic oxides, silicon oxide is preferable. Note that colloidal silica may be used as the inorganic oxide.

The content of the inorganic oxide is preferably 20 mass% or more and 80 mass% or less, more preferably 25 mass% or more and 70 mass% or less, and still more preferably 25 mass% or more and 50 mass% or less in the solid content of the curable composition.

Examples of the silicon compound include a silicon compound having a hydrolyzable group such as an alkoxy group. The silicon compound is preferably a silane coupling agent having an organic group bonded to a silicon atom and a hydrolyzable group. The organic group bonded to a silicon atom is preferably an organic group having a functional group such as an epoxy group such as a glycidoxy group, a vinyl group, a methacryloxy group, an acryloxy group, a mercapto group, an amino group, or a phenyl group, and more preferably an organic group having an epoxy group. Note that the silicon compound may have an alkyl group bonded to silicon.

Examples of commercially available products of the above-described silane coupling agent include KBM-303, KBM-402, KBM-403, KBE-402, KBE-403, KBM-1403, KBM-502, KBM-503, KBE-502, KBE-503, KBM-5103, KBM-602, KBM-603, KBM-903, KBE-903, KBE-9103, KBM-573, KBM-575, KBM-9659, KBE-585, KBM-802, KBM-803, KBE-846, and KBE-9007 (trade names) manufactured by Shin-Etsu Chemical Co., Ltd.

The content of the silicon compound is preferably 20 mass% to 90 mass%, more preferably 30 mass% to 75 mass%, and still more preferably 50 mass% to 75 mass% in the solid content of the curable composition.

The polyfunctional epoxy compound is a polyfunctional epoxy compound containing two or more epoxy groups in one molecule, and more preferably a polyfunctional epoxy compound containing two or three epoxy groups in one molecule. Examples of commercially available products of the polyfunctional epoxy compound include EX-201, EX-211, EX-212, EX-252, EX-313, EX-314, EX-321, EX-411, EX-421, EX-512, EX-521, EX-611, EX-612, EX-614, and EX-614B, which are "Denacol (trade name)" series manufactured by Nagase ChemteX Corporation.

The content of the polyfunctional epoxy compound is preferably 0 mass% to 50 mass%, more preferably 10 mass% to 40 mass%, and still more preferably 15 mass% to 30 mass% in the solid content of the curable composition.

The above-described curable composition can be prepared by mixing optional components such as an organic solvent, a leveling agent, and a curing catalyst as necessary in addition to the above-described components.

The above-described hard coat layer can be formed by applying the curable composition onto a substrate and subjecting the curable composition to a curing treatment (thermal curing, photocuring, or the like). As a means for applying the curable composition, a usually performed method such as a dipping method, a spin coating method, or a spraying method can be applied. The curing treatment is usually performed by heating the curable composition containing a polyfunctional epoxy compound. The heat curing treatment can be performed, for example, by placing the lens coated with the above-described curable composition in an environment of an atmospheric temperature of 50°C to 150°C for about 30 minutes to three hours.

### <Underlayer>

The above-described underlayer can be formed of, for example, an aqueous resin composition containing at least one kind of resin particle selected from the group consisting of a polyurethane resin, an acrylic resin, an epoxy resin, and the like.

As the above-described aqueous resin composition, a commercially available aqueous polyurethane can be used as it is, or used by being diluted with an aqueous solvent as necessary. Examples of the commercially available aqueous polyurethane include "EVAFANOL (trade name)" series manufactured by Nikka Chemical Co., Ltd., "SUPERFLEX (trade name)" series manufactured by DKS Co., Ltd., "ADEKA BONTIGHTER (trade name)" series manufactured by ADEKA Corporation, "OLESTER (trade name)" series manufactured by Mitsui Chemicals, Inc., "VONDIC (trade name)" series and "HYDRAN (trade name)" series manufactured by DIC Corporation, "Impranil (trade name)" series manufactured by Bayer AG, "SOFR_ANATE (trade name)" series manufactured by Nihon Soflan, "POIZ (trade name)" series manufactured by Kao Corporation, "SANPRENE (trade name)" series manufactured by Sanyo Chemical Industries, Ltd., "IZELAX (trade name)" series manufactured by Hodogaya Chemical Co., Ltd., "NeoRez (trade name)" series manufactured by Zeneca Group PLC.

The underlayer can be formed, for example, by applying the above-described aqueous resin composition to a surface of a substrate and drying the aqueous resin composition.

### <Functional layer>

Examples of the above-described functional layer include an antireflection layer, an ultraviolet absorbing layer, an infrared absorbing layer, a photochromic layer, an antistatic layer, and an antifogging layer. These functional layers may be used singly or in combination of two or more kinds thereof. A known technique related to a spectacle lens can be applied to these functional layers. Among these functional layers, a functional layer having an antireflection layer is preferable.

### (Antireflection layer)

The antireflection layer includes, for example, a low refractive index layer and a high refractive index layer which are alternately disposed. The number of layers included in the antireflection layer is preferably 4 to 11, and more preferably 5 to 8.

A refractive index of the low refractive index layer is preferably 1.35 to 1.80 and more preferably 1.45 to 1.50 at a wavelength of 500 nm to 550 nm. The low refractive index layer is made of an inorganic oxide, and preferably made of silicon oxide.

A refractive index of the high refractive index layer is preferably 1.90 to 2.60 and more preferably 2.00 to 2.40 at a wavelength of 500 nm to 550 nm. The high refractive index layer is made of, for example, an inorganic oxide. The inorganic oxide used for the high refractive index layer is preferably at least one selected from the group consisting of zirconium oxide, tantalum oxide, yttrium oxide, titanium oxide, niobium oxide, and aluminum oxide, and more preferably at least one selected from the group consisting of zirconium oxide and tantalum oxide.

The antireflection layer can be formed by alternately building up the low refractive index layer and the high refractive index layer by a vacuum vapor deposition method.

As described above, the present disclosure provides a spectacle lens that has excellent wipeability and suppresses occurrence of axial displacement, an antifouling agent composition, and a method for manufacturing the spectacle lens.

The present specification discloses the following embodiments.
<1>
   A spectacle lens including an antifouling layer which is a condensate of an antifouling agent composition containing:
   a compound (A) having a silyl group and a fluorinated alkyl group;
   a compound (B) having a silyl group at one end and a reactive group at the other end; and
   a chain fluorine compound (C) having no reactive group.
<2>
   The spectacle lens according to <1>, in which the antifouling agent composition contains 30 mass% to 89 mass% of the compound (A).
<3>
   The spectacle lens according to <1> or <2>, in which the antifouling agent composition contains 10 mass% to 70 mass% of the compound (B).
<4>
   The spectacle lens according to any one of <1> to <3>, in which the antifouling agent composition contains 1 mass% to 30 mass% of the compound (C).
<5>
   The spectacle lens according to any one of <1> to <4>, in which the compound (A) has the silyl group at one end and the fluorinated alkyl group at the other end.
<6>
   The spectacle lens according to any one of <1> to <5>, in which the compound (A) is linear.
<7>
   The spectacle lens according to any one of <1> to <6>, in which
   the compound (A) is represented by formula (1): 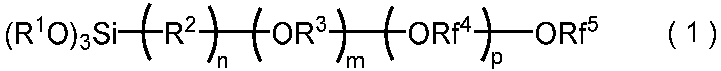
   in which
   R¹s each independently represent a monovalent hydrocarbon group having 1 to 6 carbon atoms,
   R²s each independently represent a divalent hydrocarbon group having 1 to 6 carbon atoms, n is 0 or 1,
   R³s each independently represent a divalent hydrocarbon group having 1 to 4 carbon atoms, m is 0 to 10,
   Rf⁴s each independently represent a divalent fluorinated hydrocarbon group having 1 to 4 carbon atoms, p is 10 to 100, and
   Rf⁵ represents a fluorinated alkyl group having 1 to 20 carbon atoms.
<8>
   The spectacle lens according to <7>, in which
   (ORf⁴)ₚ in formula (1) is a group represented by formula (f4-1): 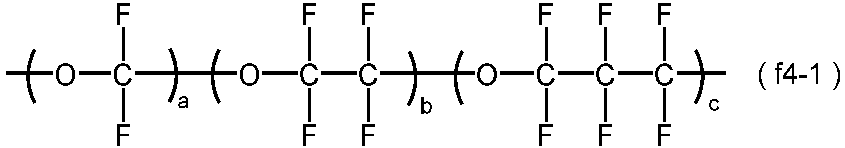
   in which a is 0 to 100, b is 0 to 100, c is 0 to 100, and a + b + c is 10 to 200.
<9>
   The spectacle lens according to any one of <1> to <8>, in which the compound (B) is linear.
<10>
   The spectacle lens according to any one of <1> to <9>, in which
   the compound (B) is represented by formula (2): 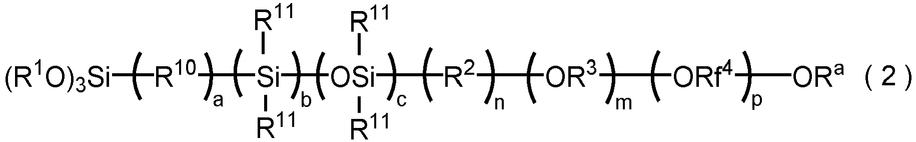
   in which
   R^{a} represents a group containing a reactive group,
   R¹⁰s each independently represent a divalent hydrocarbon group having 1 to 4 carbon atoms, a is 0 to 10,
   R¹¹s each independently represent a monovalent hydrocarbon group having 1 to 4 carbon atoms or an alkoxy group having 1 to 4 carbon atoms, b is 0 to 10, c is 0 to 10,
   R¹s each independently represent a monovalent hydrocarbon group having 1 to 6 carbon atoms,
   R²s each independently represent a divalent hydrocarbon group having 1 to 6 carbon atoms, n is 0 or 1,
   R³s each independently represent a divalent hydrocarbon group having 1 to 4 carbon atoms, m is 0 to 10,
   Rf⁴s each independently represent a divalent fluorinated hydrocarbon group having 1 to 4 carbon atoms, and p is 10 to 100.
<11>
   The spectacle lens according to any one of <1> to <10>, in which the reactive group is at least one selected from the group consisting of a hydroxy group, a vinyl group, a silyl group, an epoxy group, and an alkoxy group.
<12>
   The spectacle lens according to <10>, in which
   the R^{a} is a group represented by formula (a1): 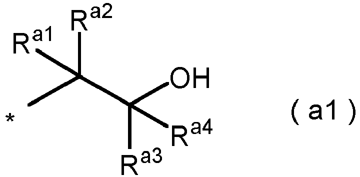 or
   formula (a2): 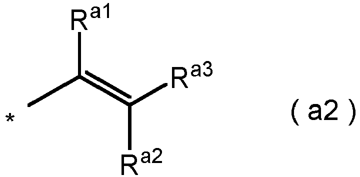
   in which R^{a1}, R^{a2}, R^{a3}, and R^{a4} each independently represent a hydrogen atom or an alkyl group having 1 to 3 carbon atoms.
<13>
   The spectacle lens according to any one of <10> to <12>, in which
   (ORf⁴)ₚ in formula (2) is a group represented by formula (f4-1): 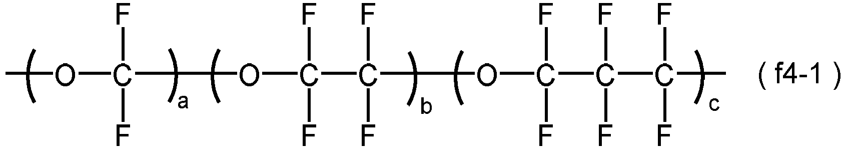
   in which a is 0 to 100, b is 0 to 100, c is 0 to 100, and a + b + c is 10 to 200.
<14> The spectacle lens according to any one of <1> to <13>, in which
   the compound (C) is represented by formula (3): 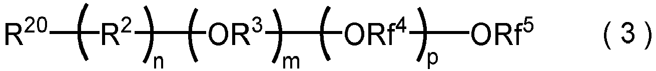
   in which
   R²⁰ represents a monovalent hydrocarbon group having 1 to 20 carbon atoms or a fluorinated alkyl group having 1 to 20 carbon atoms,
   R²s each independently represent a divalent hydrocarbon group having 1 to 6 carbon atoms, n is 0 or 1,
   R³s each independently represent a divalent hydrocarbon group having 1 to 4 carbon atoms, m is 0 to 10,
   Rf⁴s each independently represent a divalent fluorinated hydrocarbon group having 1 to 4 carbon atoms, p is 10 to 100, and
   Rf⁵ represents a fluorinated alkyl group having 1 to 20 carbon atoms.
<15>
   The spectacle lens according to <14>, in which
   (ORf⁴)ₚ in formula (3) is a group represented by formula (f4-1): 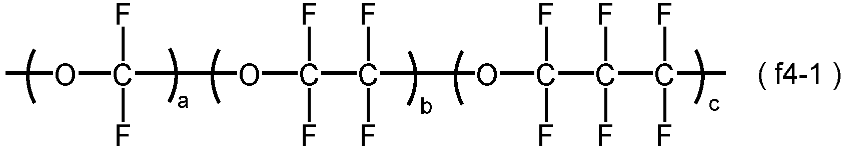
   in which a is 0 to 100, b is 0 to 100, c is 0 to 100, and a + b + c is 10 to 100.
<16>
   The spectacle lens according to any one of <1> to <15>, in which a total value of surface free energy of the antifouling layer is more than 10.0 mJ/m².
<17>
   The spectacle lens according to any one of <1> to <16>, in which a base component of surface free energy of the antifouling layer is more than 0.95 mJ/m².
<18>
   An antifouling agent composition containing:
   a compound (A) having a silyl group and a fluorinated alkyl group;
   a compound (B) having a silyl group at one end and a reactive group at the other end; and
   a chain fluorine compound (C) having no reactive group.
<19>
   A method for manufacturing a spectacle lens, the method including a step of forming an antifouling layer on a spectacle lens with an antifouling agent composition containing:
   a compound (A) having a silyl group and a fluorinated alkyl group;
   a compound (B) having a silyl group at one end and a reactive group at the other end; and
   a chain fluorine compound (C) having no reactive group.

### Examples

Hereinafter, the present embodiment will be described more specifically using Examples and Comparative Examples. Note that the present invention is not limited by the following Examples at all.

### [Preparation of antifouling agent composition and preparation of antifouling agent pellets]

### [Manufacturing Examples 1 to 4 and Comparative Manufacturing Examples 1 and 2]

A composition obtained by mixing the compounds presented in Table 1 was made into a 20 mass% solution, and metal pellets in which a copper container was filled with steel wool was impregnated with the solution such that the solid content after solvent evaporation was 15 mg. After impregnation with the 20 mass% solution, the solvent was evaporated by heating in an oven set at 80°C for 20 minutes to obtain a solid content of 15 mg.

**Table 1**

| | | | Manufacturing Example 1 | Manufacturing Example 2 | Manufacturing Example 3 | Manufacturing Example 4 | Comparative Manufacturing Example 1 | Comparative Manufacturing Example 2 |
|---|---|---|---|---|---|---|---|---|
| Antifouling agent composition | Compound (A) | Compound A-1 | 40 | 65 | 40 | 65 | 100 | - |
| | Compound (B) | Compound B-1 | 50 | 20 | - | - | - | 100 |
| | | Compound B-2 | - | - | 50 | 20 | - | - |
| | Compound (C) | Compound C-1 | 10 | 15 | 10 | 15 | - | - |

**The values** are represented by parts by mass.

Abbreviations in Table 1 are as described below.
Compound A-1: Compound (A) represented by formula (1) (R¹ = -CH₃, R² = -C₃H₆-, n = 1, R³ = -C₃H₆-, Rf⁴ = (OCF₂)₃₈(OCF₂CF₂)₄₀(OCF₂CF₂CF₂)_{0.5}, Rf⁵ = -CF₃.)
Compound B-1: Compound (B) represented by formula (2) (R^{a} = -C₂H₄OH, R¹⁰ = -C₃H₆-, a = 1, R¹¹ = -CH₃, b = 1, c = 20, R¹ = -CH₃, R² = -C₃H₆-, n = 1, R³ = -C₃H₆-, Rf⁴ = ((OCF₂)₃₈(OCF₂CF₂)₄₀(OCF₂CF₂CF₂)_{0.5}.)
Compound B-2: Compound (B) represented by formula (2) (R^{a} = -C₂H₄OH, a = 0, b = 0, c = 0, R¹ = -CH₃, R² = -C₂H₄-, n = 1, R³ = -C₃H₆-, Rf⁴ = (OCF₂)₉(OCF₂CF₂)₉.)
Compound C-1: Compound (C) represented by formula (3) (R²⁰ = -CH₃, R² = -C₃H₆-, n = 1, R³ = -C₃H₆-, Rf⁴ = (OCF₂)₃₈(OCF₂CF₂)₄₀(OCF₂CF₂CF₂)_{0.5}, Rf⁵ = -CF₃.)

### [Examples 1 to 4 and Comparative Examples 1 and 2]

### (Vapor deposition of antifouling agent composition on spectacle lens)

A liquid obtained by adding 90 parts by mass of colloidal silica (Snowtex-40, Nissan Chemical Industries, Ltd.), 81.6 parts by mass of methyltrimethoxysilane as an organosilicon compound, 176 parts by mass of γ-glycidoxypropyltrimethoxysilane, 2.0 parts by mass of 0.5 N hydrochloric acid, 20 parts by mass of acetic acid, and 90 parts by mass of water to a glass container was stirred at room temperature for eight hours and then left at room temperature for 16 hours to obtain a hydrolysis solution. To this solution, 120 parts by mass of isopropyl alcohol, 120 parts by mass of n-butyl alcohol, 16 parts by mass of aluminum acetylacetone, 0.2 parts by mass of a silicone-based surfactant, and 0.1 parts by mass of an ultraviolet absorber were added, and the mixture was stirred at room temperature for eight hours and then aged at room temperature for 24 hours to obtain a coating liquid. A plastic lens substrate (manufactured by HOYA CORPORATION, trade name EYAS, prescription S 0.00, C 0.00) pretreated with an alkali aqueous solution was immersed in the above-described coating liquid, and after completion of the immersion, the lens substrate pulled up at a pulling speed of 20 cm/min was heated at 120°C for two hours to form a cured film, whereby a hard coat layer (referred to as layer A) was formed. Next, an antireflection layer in which silica and zirconia were alternately layered was formed on the hard coat layer by a vacuum vapor deposition method.

After the antireflection layer was vapor-deposited, an ion gun treatment was performed in order to activate a surface. The ion gun treatment was performed under the following conditions.
Acceleration voltage: 500 V
Acceleration current: 230 mA
Introduced gas: oxygen (20 sccm)
Ion irradiation time: 30 seconds

Thereafter, a dome in which a substrate was set was moved to a chamber in which an antifouling agent composition was to be vapor-deposited. In the chamber, pellets impregnated with any of the antifouling agent compositions (see Table 2) prepared in the above-described Manufacturing Examples were set on a halogen heater heating table. The pellets were heated with a halogen heater, and the antifouling agent composition in the pellets was vapor-deposited. A reached temperature during heating was about 600°C.

The spectacle lens on which the antifouling agent composition had been vapor-deposited was taken out, put in an oven set at 60°C, and held for four hours for annealing.

The obtained spectacle lenses were evaluated by the following method. Tables 2 and 3 present the results.

### [Wipeability test]

Artificial sebum was prepared with the following composition.
Cholesterol: 2 mass%
Squalene: 2 mass%
Palmitic acid: 2 mass%
Triolein: 4 mass%
Ethanol: 90 mass%

This was applied onto a glass substrate by spin coating. A silicon plug that had been roughened be being polished with #240 abrasive paper in advance was pressed against the glass substrate with a load of 2 kg to attach the artificial sebum to an end of the silicon plug.

Next, the silicon plug was pressed against a spectacle lens to be evaluated with a load of 2 kg. Note that, here, the spectacle lenses obtained above were used as the spectacle lens for evaluation.

Next, the spectacle lens was set in a frictional wear tester. This frictional wear tester is designed such that a substrate to be evaluated can be subjected to a sliding test with a constant load, a constant speed, and a constant stroke. As a medium (sliding terminal) used for the test, a medium obtained by winding lens-cleaning paper around an eraser was used.

This was attached to the frictional wear tester and pressed against the spectacle lens for evaluation with a load of 500 g, a stroke was set to 30 mm, and the spectacle lens was wiped by being slid in a reciprocating manner ten times. A wiped state of the artificial sebum was examined every ten times the spectacle lens was slid in a reciprocating manner.

The wiped state was quantified by measuring a haze value. Note that when the haze was 1 or less, a fingerprint was hardly noticeable.

### [Axial displacement test]

As illustrated in Fig. 2, two straight lines (line a and line b) were drawn on the obtained spectacle lens so as to be orthogonal to each other and to pass through a geometric center (GC) in a lateral direction (X axis) and a longitudinal direction (Y axis) of the spectacle lens. Then, a position on the line a and 5 mm away from the geometric center (GC) was defined as a point A, and a straight line (line c) passing through the point A and parallel to the line b was drawn on the spectacle lens. Furthermore, a point on the line a 20 mm away from the point A in a direction opposite to the geometric center (GC) was defined as a point B. Subsequently, a spectacle processing jig (blocker) was fixed to a convex surface side using a spectacle processing tape. "RD-6364" (manufactured by BIG TECHNOS CORPORATION) was used as the spectacle processing tape, and the spectacle processing tape was attached such that a center of the spectacle processing tape was at the point A and a long axis of the spectacle processing tape was parallel to the line a. Subsequently, to a concave surface, a protective tape "AT-22LH" (manufactured by BIG TECHNOS CORPORATION) was attached such that a center of the protective tape was at the point A and a long axis of the protective tape was parallel to the line a. Thereafter, the blocker to which the spectacle lens was fixed was placed and fixed on a holder of an optical microscope to which the holder was fixed on a stage. Subsequently, coordinates of the point A and the point B in a case where the X coordinate of the geometric center (GC) was defined as 0 and the Y coordinate thereof was defined as 0 were measured using an optical microscope and defined as coordinates A and coordinates B, respectively. Subsequently, a spectacle lens to which the blocker was attached was fixed to a wet type lens edging machine "ACCEL-EDGER" (manufactured by HOYA CORPORATION), and lens shaping was performed on the basis of frame data.

Subsequently, the spectacle lens that had been subjected to lens shaping was fixed to the holder, and coordinates of the point A and the point B were measured using the optical microscope and defined as coordinates A' and coordinates B', respectively. Out of angles formed by a straight line passing through the coordinates A and B and a straight line passing through the coordinates A' and B', an acute angle was defined as an axial displacement angle. Note that when the axial displacement angle during lens shaping is 0.5° or less, use as a spectacle lens is possible without any problem.

**Table 2**

| Examples | Antifouling agent composition | Wiping test | | | | | |
|---|---|---|---|---|---|---|---|
| | | Number of times of wiping | 10 | 20 | 30 | 40 | 50 |
| Example 1 | Manufacturing Example 1 | Haze value | 10 | 20 | 30 | 40 | 50 |
| Example 2 | Manufacturing Example 2 | | 87.42% | 96.61% | 98.09% | 98.86% | 99.29% |
| Example 3 | Manufacturing Example 3 | | 92.09% | 97.63% | 98.83% | 99.27% | 99.47% |
| Example 4 | Manufacturing Example 4 | | 77.39% | 92.68% | 97.11% | 98.59% | 99.10% |
| Comparative Example 1 | Comparative Manufacturing Example 1 | | 84.94% | 90.95% | 95.07% | 96.70% | 97.55% |
| Comparative Example 2 | Comparative Manufacturing Example 2 | | 64.25% | 77.63% | 86.58% | 93.03% | 95.41% |

**Table 3**

| Examples | Antifouling agent composition | Axial displacement test Axial displacement angle(°) |
|---|---|---|
| Example 1 | Manufacturing Example 1 | 0.1282 |
| Example 2 | Manufacturing Example 2 | 0.0816 |
| Comparative Example 1 | Comparative Manufacturing Example 1 | 1.7903 |

### [Measurement of surface free energy]

For measurement of surface free energy characteristics, "DM700" manufactured by Kyowa Interface Science Co., Ltd. was used. A contact angle of a surface of an antifouling layer formed on a spectacle lens was measured. As a liquid for contact angle measurement, water, diiodomethane, and ethylene glycol were used. 2 µL of each of the liquids was dropped onto a surface of the spectacle lens, and the contact angle was measured. From the measured contact angle, surface free energy and component values constituting the surface free energy were determined by a surface free energy calculation formula based on an acid-base theory. Table 4 represents the results.

**Table 4**

| Examples | Antifouling agent composition | Surface free energy (mJ/m²) | |
|---|---|---|---|
| | | Base component | Total value |
| Example 3 | Manufacturing Example 3 | 1.4 | 10.4 |
| Example 4 | Manufacturing Example 4 | 0.99 | 10.1 |
| Comparative Example 1 | Comparative Manufacturing Example 1 | 0.7 | 9.7 |
| Comparative Example 2 | Comparative Manufacturing Example 2 | 2.3 | 11.6 |

As described above, it is found from the results of Examples and Comparative Examples that the present embodiment provides a spectacle lens that has excellent wipeability and suppresses occurrence of axial displacement during lens shaping, an antifouling agent composition, and a method for manufacturing the spectacle lens.

### Reference Signs List

- 1: Spectacle lens
- 11: Substrate for spectacle lens
- 11a, 21fa, 31fa: Object-side surface
- 11b, 21bb, 31bb: Eyeball-side surface
- 21f, 21b: Hard coat layer
- 31f, 31b: Functional layer
- 41f, 41b: Antifouling layer

## Claims

1. A spectacle lens comprising an antifouling layer which is a condensate of an antifouling agent composition comprising:
a compound (A) having a silyl group and a fluorinated alkyl group;
a compound (B) having a silyl group at one end and a reactive group at the other end; and
a chain fluorine compound (C) having no reactive group.

2. The spectacle lens according to claim 1, wherein the antifouling agent composition comprises 30 mass% to 89 mass% of the compound (A).

3. The spectacle lens according to claim 1, wherein the antifouling agent composition comprises 10 mass% to 70 mass% of the compound (B).

4. The spectacle lens according to claim 1, wherein the antifouling agent composition comprises 1 mass% to 30 mass% of the compound (C).

5. The spectacle lens according to claim 1, wherein the compound (A) has the silyl group at one end and the fluorinated alkyl group at the other end.

6. The spectacle lens according to claim 1, wherein
the compound (A) is represented by formula (1): 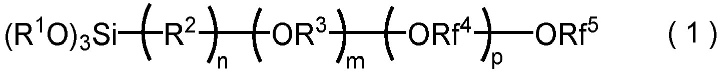
in which
R¹s each independently represent a monovalent hydrocarbon group having 1 to 6 carbon atoms,
R²s each independently represent a divalent hydrocarbon group having 1 to 6 carbon atoms, n is 0 or 1,
R³s each independently represent a divalent hydrocarbon group having 1 to 4 carbon atoms, m is 0 to 10,
Rf⁴s each independently represent a divalent fluorinated hydrocarbon group having 1 to 4 carbon atoms, p is 10 to 100, and
Rf⁵ represents a fluorinated alkyl group having 1 to 20 carbon atoms.

7. The spectacle lens according to claim 6, wherein
(ORf⁴)ₚ in formula (1) is a group represented by formula (f4-1): 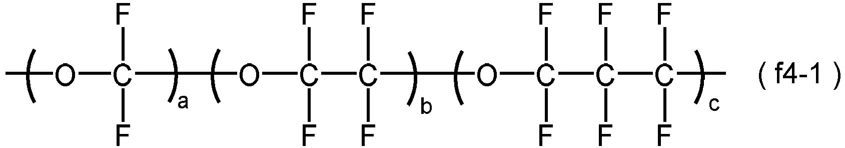
in which a is 0 to 100, b is 0 to 100, c is 0 to 100, and a + b + c is 10 to 200.

8. The spectacle lens according to claim 1, wherein
the compound (B) is represented by formula (2): 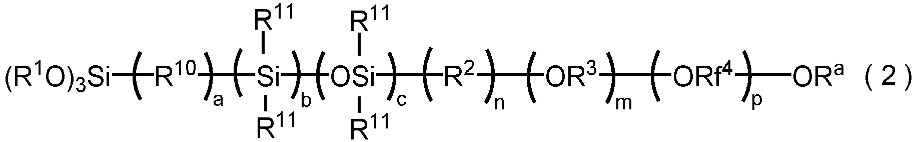
in which
R^{a} represents a group containing a reactive group,
R¹⁰s each independently represent a divalent hydrocarbon group having 1 to 4 carbon atoms, a is 0 to 10,
R¹¹s each independently represent a monovalent hydrocarbon group having 1 to 4 carbon atoms or an alkoxy group having 1 to 4 carbon atoms, b is 0 to 10, c is 0 to 10,
R¹s each independently represent a monovalent hydrocarbon group having 1 to 6 carbon atoms,
R²s each independently represent a divalent hydrocarbon group having 1 to 6 carbon atoms, n is 0 or 1,
R³s each independently represent a divalent hydrocarbon group having 1 to 4 carbon atoms, m is 0 to 10,
Rf⁴s each independently represent a divalent fluorinated hydrocarbon group having 1 to 4 carbon atoms, and p is 10 to 100.

9. The spectacle lens according to claim 1, wherein the reactive group is at least one selected from the group consisting of a hydroxy group, a vinyl group, a silyl group, an epoxy group, and an alkoxy group.

10. The spectacle lens according to claim 7, wherein
the R^{a} is a group represented by formula (a1): 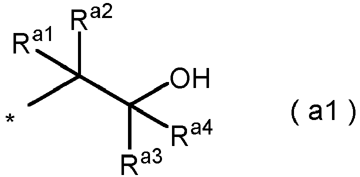 or
formula (a2): 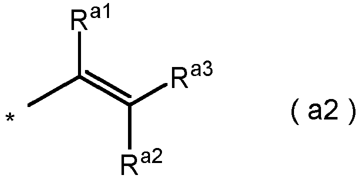
in which R^{a1}, R^{a2}, R^{a3}, and R^{a4} each independently represent a hydrogen atom or an alkyl group having 1 to 3 carbon atoms.

11. The spectacle lens according to claim 8, wherein
(ORf⁴)ₚ in formula (2) is a group represented by formula (f4-1): 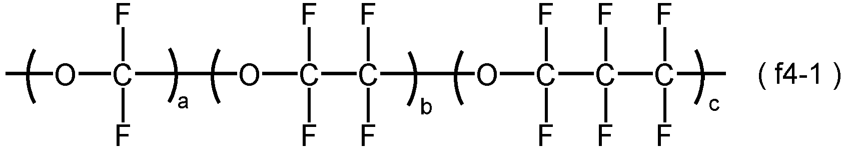
in which a is 0 to 100, b is 0 to 100, c is 0 to 100, and a + b + c is 10 to 200.

12. The spectacle lens according to claim 1, wherein
the compound (C) is represented by formula (3): 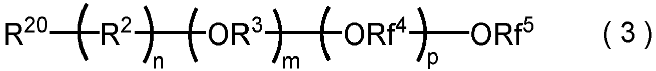
in which
R²⁰ represents a monovalent hydrocarbon group having 1 to 20 carbon atoms or a fluorinated alkyl group having 1 to 20 carbon atoms,
R²s each independently represent a divalent hydrocarbon group having 1 to 6 carbon atoms, n is 0 or 1,
R³s each independently represent a divalent hydrocarbon group having 1 to 4 carbon atoms, m is 0 to 10,
Rf⁴s each independently represent a divalent fluorinated hydrocarbon group having 1 to 4 carbon atoms, p is 10 to 100, and
Rf⁵ represents a fluorinated alkyl group having 1 to 20 carbon atoms.

13. The spectacle lens according to claim 12, wherein
(ORf⁴)ₚ in formula (3) is a group represented by formula (f4-1): 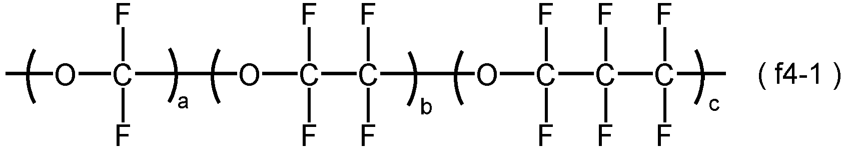
in which a is 0 to 100, b is 0 to 100, c is 0 to 100, and a + b + c is 10 to 100.

14. The spectacle lens according to any one of claims 1 to 13, wherein a total value of surface free energy of the antifouling layer is more than 10.0 mJ/m².

15. The spectacle lens according to any one of claims 1 to 13, wherein a base component of surface free energy of the antifouling layer is more than 0.95 mJ/m².

16. An antifouling agent composition comprising:
a compound (A) having a silyl group and a fluorinated alkyl group;
a compound (B) having a silyl group at one end and a reactive group at the other end; and
a chain fluorine compound (C) having no reactive group.

17. A method for manufacturing a spectacle lens, the method comprising a step of forming an antifouling layer on a spectacle lens with an antifouling agent composition comprising:
a compound (A) having a silyl group and a fluorinated alkyl group;
a compound (B) having a silyl group at one end and a reactive group at the other end; and
a chain fluorine compound (C) having no reactive group.
